**Europäisches Patentamt**

**European Patent Office**

**Office européen des brevets**

(19)

(11) **EP 1 559 748 A1**

(12) **EUROPEAN PATENT APPLICATION**
published in accordance with Art. 158(3) EPC

(43) Date of publication:
**03.08.2005 Bulletin 2005/31**

(51) Int Cl.⁷: **C08L 67/02**

(21) Application number: **03810615.9**

(86) International application number:
**PCT/JP2003/014129**

(22) Date of filing: **06.11.2003**

(87) International publication number:
**WO 2004/041934 (21.05.2004 Gazette 2004/21)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **07.11.2002 JP 2002323967**

(71) Applicant: **KANEKA CORPORATION**
**Osaka-shi, Osaka 530-8288 (JP)**

(72) Inventors:
• **SUNAGAWA, Takenobu**
  **Toyonaka-shi, Osaka 561-0872 (JP)**

• **TONE, Hiroshi**
  **Tarumi-ku, Kobe-shi, Hyogo 655-0872 (JP)**
• **SAKAMOTO, Hideyuki**
  **Takasago-shi, Hyogo 676-0026 (JP)**
• **NAKAJIMA, Hiroki**
  **Akashi-shi, Hyogo 674-0083 (JP)**
• **NAKANISHI, Yasushi**
  **Takasago-shi, Hyogo 676-0026 (JP)**
• **KADOKURA, Mamoru**
  **Himeji-shi, Hyogo 671-1242 (JP)**

(74) Representative: **VOSSIUS & PARTNER**
**Siebertstrasse 4**
**81675 München (DE)**

(54) **THERMOPLASTIC POLYESTER RESIN COMPOSITION AND MOLDED OBJECT OBTAINED THEREFROM**

(57)    The present invention provides a thermoplastic polyester resin composition, which exhibits stable processability in extrusion molding, blow molding and calender molding, particularly in profile extrusion and extrusion molding of boards and pipes, by efficiently enhancing melt viscosity of thermoplastic polyester resin, and gives a molded article having favorable surface properties and excellent impact strength. By compounding (B) 0.1 to 50 parts by weight of a viscosity modifier for thermoplastic polyester resin comprising (a) 3 to 95 % by weight of alkyl (meth)acrylate containing an epoxy group, (b) 5 to 97 % by weight of another alkyl (meth) acrylate and (c) 0 to 92 % by weight of another vinyl monomer copolymerizable therewith, and having weight average molecular weight of 1,000 to 400,000; and (C) 1 to 50 parts by weight of a core-shell graft polymer, based on (A) 100 parts by weight of thermoplastic polyester resin, stable processability is exhibited in extrusion molding and a molded article having favorable surface properties and excellent impact strength is obtained.

EP 1 559 748 A1

**Description**

TECHNICAL FIELD

The present invention relates to a thermoplastic polyester resin composition, which provides stable processability in extrusion molding, calender molding, blow molding and injection molding of thermoplastic polyester resin, particularly in profile extrusion and extrusion molding of boards and pipes, and a molded article having favorable surface properties and impact strength, and a molded article comprising the same.

Specifically, the present invention relates to a thermoplastic polyester resin composition, in which a viscosity modifier for thermoplastic polyester resin, which comprises alkyl (meth)acrylate containing an epoxy group, another alkyl (meth)acrylate and another vinyl monomer copolymerizable therewith and has weight average molecular weight of 1,000 to 400,000, and a core-shell type graft polymer are compounded, and a molded article comprising the same.

BACKGROUND ART

Thermoplastic polyester resin is a polymer that is excellent in physical properties such as transparency, mechanical properties, gas barrier properties and heat resistance, chemical properties such as solvent resistance, acid resistance and alkali resistance, economical efficiency and recyclability and is widely used in various fields. Particularly, recently, studies are being conducted regarding use of thermoplastic polyester resin for profile extrusion and extrusion molding of sheets and films, utilizing the surface properties thereof.

On the other hand, among thermoplastic polyester resins, crystalline thermoplastic polyester resin such as polyethylene terephthalate and polybutylene terephthalate are generally largely temperature dependent with respect to melt viscosity and have low melt viscosity in melt processing such as injection molding and extrusion molding conducted in a temperature range of the melting point or higher, thus being disadvantageous in terms of processability.

Also, thermoplastic polyester resin has low impact strength, particularly low notched impact strength and therefore, use thereof is limited.

In order to improve mold processability or impact strength of thermoplastic polyester resin, conventionally, studies have been conducted regarding compounding a copolymer having compatibility with such resins as a melt viscosity adjuster or an impact modifier.

For example, as a method for adjusting a melt viscosity, disclosed are the method of compounding a copolymer having weight average molecular weight of at least 500,000 and comprising a specific (meth)acrylic ester to thermoplastic resin (see JP-A-1-268761), the method of compounding a copolymer having weight average molecular weight of 1,000,000 to 4,000,000 and comprising styrene, glycidyl methacrylate and (meth)acrylic ester to thermoplastic polyester resin (see JP-A-6-41376) and the method of compounding a vinyl copolymer containing at least 5 % by weight of glycidyl methacrylate to polyethylene terephthalate (see JP-A-62-187756). However, significant increase in melt viscosity of the thermoplastic polyester resin compositions, which is sufficient for achieving stable moldability in profile extrusion and extrusion molding of boards and pipes, cannot be observed. Also, the method of adding polyglycidyl methacrylate having weight average molecular weight of at least 900 is disclosed (see JP-A-62-149746). However, although significant increase in melt viscosity is observed, there are problems such as shrinking and insufficient gloss of the obtained molded article. Also, in the above methods, the effect of improving impact strength is not observed.

Consequently, improvement of mold processability in extrusion molding for poor drawing and poor dimensional accuracy, such as uneven thickness, and improvement in surface properties, such as shrinking, poor gloss and surface roughness of the molded article, are strongly desired.

In order to improve impact strength, disclosed are the method of compounding a vinyl copolymer comprising an aromatic vinyl monomer, a cyanized vinyl monomer and a small amount (0.1 to 1.5 part by weight) of a vinyl monomer containing an epoxy group, a fibrous reinforcing agent and an inorganic filler to thermoplastic polyester resin (see JP-A-6-287421) and the method of compounding a graft polymer having crosslinked acrylic rubber or organosiloxane rubber as the rubber material, AS resin containing a monomer having 0.1 to 0.4 % of epoxy groups and a filler such as glass fiber to polyester resin (see JP-A-5-287181). In these methods, the effect of improving impact strength is observed, but significant increase of melt viscosity is not observed.

Consequently, the present invention provides a thermoplastic polyester resin composition, which significantly increases melt viscosity of thermoplastic polyester resin, enables stable extrusion molding, blow molding and calender molding, particularly profile extrusion and extrusion molding of boards and pipes which are difficult, and gives a molded article having favorable surface properties and excellent impact strength, and a molded article comprising the same.

DISCLOSURE OF INVENTION

As a result of intensive studies based on the present state, the present inventors have found that by compounding a copolymer obtained by polymerizing a mixture of specific types and amounts of monomers so that the weight average molecular weight is within a specific range and a core-shell graft polymer obtained by polymerizing a mixture of specific types and amounts of monomers to thermoplastic polyester resin, a significant effect of improving viscosity and impact strength unattainable in the prior art are obtained and the above problems are solved. Thus, the present invention was achieved.

That is, the present invention relates to a thermoplastic polyester resin composition comprising (B) 0.1 to 50 parts by weight of a viscosity modifier for thermoplastic polyester resin comprising (a) 3 to 95 % by weight of alkyl (meth)acrylate containing an epoxy group, (b) 5 to 97 % by weight of another alkyl (meth)acrylate and (c) 0 to 92 % by weight of another vinyl monomer copolymerizable therewith, and having weight average molecular weight of 1,000 to 400,000; and (C) 1 to 50 parts by weight of a core-shell graft polymer, based on (A) 100 parts by weight of thermoplastic polyester resin.

The viscosity modifier for thermoplastic polyester resin (B) is preferably a viscosity modifier for thermoplastic polyester resin comprising (a) 15 to 95 % by weight of alkyl (meth)acrylate containing an epoxy group, (b) 5 to 85 % by weight of another alkyl (meth)acrylate and (c) 0 to 80 % by weight of another vinyl monomer copolymerizable therewith, and having weight average molecular weight of 1,000 to 400,000.

The core-shell graft polymer (C) is preferably a core-shell graft polymer having as the core layer, 50 to 95 parts by weight of a rubbery polymer (d') which comprises a monomer mixture (d) containing (d-1) 35 to 100 % by weight of a butadiene and/or alkyl acrylate monomer, (d-2) 0 to 65 % by weight of an aromatic vinyl monomer, (d-3) 0 to 20 % by weight of a vinyl monomer copolymerizable therewith, and (d-4) 0 to 5 % by weight of a multi-functional monomer, and has glass transition temperature of at most 0°C; and as the shell layer, 5 to 50 parts by weight of a polymer (e') which comprises a monomer mixture (e) containing (e-1) 10 to 100 % by weight of an alkyl methacrylate monomer, (e-2) 0 to 60 % by weight of an alkyl acrylate monomer, (e-3) 0 to 90 % by weight of an aromatic vinyl monomer, (e-4) 0 to 25 % by weight of a cyanized vinyl monomer, and (e-5) 0 to 20 % by weight of a vinyl monomer copolymerizable therewith.

Also, the present invention relates to a molded article comprising the thermoplastic polyester resin composition and a molded article obtained by extrusion molding the thermoplastic polyester resin composition.


BEST MODE FOR CARRYING OUT THE INVENTION

The thermoplastic polyester resin (A) used in the present invention is resin obtained by polycondensation of an aromatic dicarboxylic acid component and a diol component. An example of the aromatic dicarboxylic acid is aromatic dicarboxylic acid having terephthalic acid or alkyl ester thereof as the main component and an example of the diol is diol having alkylene glycol as the main component.

The thermoplastic polyester resin (A) is not particularly limited and conventionally used polyester resin and recycled polyester resin can be used. Examples are aromatic polyesters such as polyethylene terephthalate, polybutylene terephthalate, polycyclohexane terephthalate and polyethylene naphthalate and aromatic copolyesters such as PETG (polyethylene terephthalate modified by glycol) including poly(ethylene-co-1,4-cyclohexanedimethyleneterephthalate).

Crystalline polyester resin generally tends to be crystallized depending on processing conditions such as the cooling temperature and the discharge amount and when the crystallinity is high, impact strength tends to decrease. By adding amorphous resin to crystalline polyester resin, crystallization is inhibited and high impact strength can be exhibited under a wide range of processing conditions.

As the amorphous resin used in the present invention, known resins are used. Examples are amorphous polyester resin such as PETG, polycarbonate resin, polyarlyate resin, acrylic resin such as polymethyl methacrylate and polyolefin resin such as polypropylene and polyethylene. Of these, from the viewpoint that crystallization inhibiting efficiency is excellent, PETG and polycarbonate resin are preferable.

The amount of the amorphous resin is preferably 5 to 100 parts by weight, more preferably 5 to 50 parts by weight, based on 100 parts by weight of crystalline polyester resin. When the amount of the amorphous resin is less than 5 parts by weight, the crystalline polyester resin tends to be affected by the processing conditions, suppressing crystallinity becomes difficult and stable impact strength may not be obtained. When the amount is more than 100 parts by weight, surface properties of the molded article tend to become poor.

The crystallinity of the thermoplastic polyester resin is preferably at most 20 %, more preferably at most 15 %. When the crystallinity is more than 20 %, impact strength tends to decrease.

The viscosity modifier for thermoplastic polyester resin (B) used in the present invention is obtained by polymerizing a monomer mixture comprising (a) 3 to 95 % by weight of alkyl (meth)acrylate containing an epoxy group, (b) 5 to 97 % by weight of another alkyl acrylate and (c) 0 to 92 % by weight of another vinyl monomer copolymerizable therewith. By using the viscosity modifier for thermoplastic polyester resin (B) mixed in the above range, the melt viscosity of thermoplastic polyester resin can be improved to a level at which profile molding and extrusion molding of boards and pipes can be conducted with stability.

In a composition comprising only the thermoplastic polyester resin (A) and core-shell graft copolymer (C), sufficient dispersibility of the core-shell graft copolymer (C) in the composition cannot be obtained. By adding the viscosity modifier for thermoplastic polyester resin (B), dispersibility of the core-shell graft copolymer (C) in the composition of the present invention is improved significantly. As a result, the thermoplastic polyester resin composition of the present invention can improve impact strength, without losing the physical and chemical properties of thermoplastic polyester resin. Also, the thermoplastic polyester resin composition of the present invention can improve melt viscosity in melt processing, such as extrusion molding, blow molding and calender molding, more than a composition containing only the thermoplastic polyester resin (A) and the viscosity modifier for thermoplastic polyester resin (B), and can inhibit decrease of melt viscosity when molding in high temperatures. Consequently, processability can be stabilized.

Specific examples of the alkyl (meth)acrylate containing an epoxy group (a) are acrylates containing an epoxy group such as glycidyl acrylate and methacrylates containing an epoxy group such as glycidyl methacrylate. These can be used alone or two or more kinds can be used together. The content of alkyl (meth)acrylate containing an epoxy group (a) is 3 to 95 % by weight, preferably 15 to 95 % by weight, more preferably 20 to 95 % by weight, further preferably 30 to 95 % by weight, in the viscosity modifier for thermoplastic polyester resin (B). When the content is less than 3 % by weight, melt viscosity cannot sufficiently be increased and stable processability may not be obtained. When the content is more than 95 % by weight, the melt viscosity becomes too high and the obtained molded article tends to shrink and lose its gloss.

Specific examples of the other alkyl (meth)acrylate (b) are alkyl acrylates containing an alkyl group having 1 to 8 carbon atoms such as 2-ethylhexyl acrylate, butyl acrylate, ethyl acrylate and methyl acrylate and alkyl methacrylates containing an alkyl group having 1 to 8 carbon atoms such as 2-ethylhexyl methacrylate, butyl methacrylate, ethyl methacrylate and methyl methacrylate. These can be used alone or two or more kinds can be used together. The content of the other alkyl (meth)acrylate (b) is 5 to 97 % by weight, preferably 5 to 85 % by weight, more preferably 5 to 80 % by weight, further preferably 5 to 70 % by weight in the viscosity modifier for thermoplastic polyester resin (B). When the content is outside this range, melt viscosity cannot sufficiently be increased and stable processability may not be obtained.

Specific examples of the other vinyl monomer (c) copolymerizable with the alkyl (meth)acrylate containing an epoxy group (a) and other alkyl (meth)acrylate (b) are aromatic vinyls such as styrene, α-methylstyrene and chlorostyrene and vinyl cyanides such as acrylonitrile and methacrylonitrile. These can be used alone or two or more kinds can be used together. The amount of the other copolymerizable vinyl monomer (c) is 0 to 92 % by weight, preferably 0 to 80 % by weight, more preferably 0 to 75 % by weight, further preferably 0 to 65 % by weight. When the amount is more than 92 % by weight, melt viscosity cannot sufficiently be increased and stable processability may not be obtained.

The weight average molecular weight of the viscosity modifier for thermoplastic polyester resin (B) used in the present invention is 1,000 to 400,000, preferably 1,000 to 200,000, more preferably 1,000 to 100,000. When the weight average molecular weight is less than 1,000, obtaining powder from the latex after polymerization tends to become difficult. When the weight average molecular weight is more than 400,000, dispersibility in the thermoplastic polyester resin becomes poor and as a result, the effect of improving viscosity may not sufficiently be obtained.

The process for preparing the viscosity modifier for thermoplastic polyester resin (B) of the present invention is not particularly limited. For example, the viscosity modifier can be prepared by methods such as suspension polymerization and emulsion polymerization, but emulsion polymerization is preferable.

When the viscosity modifier is prepared by emulsion polymerization, the monomer mixture is emulsion polymerized in the presence of a suitable medium, emulsifier, chain transfer agent and polymerization initiator.

The medium used in emulsion polymerization is usually water.

As the emulsifier, known emulsifiers are used. Examples are anionic surfactants such as fatty acid salt, alkyl sulfate, alkyl benzene sulfonate, alkyl phosphate and sulfosuccinate diester and nonionic surfactants such as polyoxyethylene alkyl ether and polyoxyethylene fatty acid ester.

The polymerization initiator is not particularly limited and aqueous and oil-soluble polymerization initiators are used. For example, common inorganic polymerization initiators such as persulfates, organic peroxides or azo compounds can be used alone or these initiator compounds can be combined with sulfites, thiosulfates, primary metal salts or sodium formaldehyde sulfoxylate and used as a redox-type initiator. Preferable examples of persulfates are sodium persulfate, potassium persulfate and ammonium persulfate. Preferable examples of organic peroxides are t-butylhydroperoxide, cumene hydroperoxide, benzoyl peroxide and lauroyl peroxide.

The chain transfer agent is not particularly limited and for example, alkyl mercaptans such as t-dodecylmercaptan, n-dodecylmercaptan, t-decylmercaptan, n-decylmercaptan and n-octylmercaptan and alkyl ester mercaptan such as 2-ethylhexylthioglycollate can be used.

The temperature and time of the polymerization reaction are not particularly limited and can be adjusted accordingly in order to obtain the desired weight average molecular weight depending on the intended use.

The viscosity modifier for thermoplastic polyester resin (B) of the present invention can be a one-step polymer or a multi-step polymer such as a two-step polymer or a three-step polymer. In the case that polymerization is conducted by two-step polymerization, by adding the monomers of the second step onward after confirming that polymerization of the first step has been completed, polymerization of the second step can be conducted without mixing with the monomers of the first step.

The particles in the polymer latex obtained in this way usually have average particle size of about 100 to 3000 Å and are collected from the latex by the usual method of salting out or coagulating by adding an electrolyte or by spraying in hot air and drying. Also, when necessary, washing, dehydrating and drying by the usual methods are conducted.

The compounding ratio of the thermoplastic polyester resin (A) and the viscosity modifier for thermoplastic polyester resin (B) in the thermoplastic polyester resin composition of the present invention can be within a wide range and is 0.1 to 50 parts by weight, preferably 2 to 30 parts by weight, more preferably 2 to 10 parts by weight, of the viscosity modifier for thermoplastic polyester resin (B) based on 100 parts by weight of the thermoplastic polyester resin (A). When the amount of the viscosity modifier for thermoplastic polyester resin (B) is less than 0.1 part by weight, melt viscosity cannot sufficiently be increased and stable processability may not be obtained. When the amount is more than 50 parts by weight, melt viscosity becomes too high and the obtained molded article tends to shrink and lose its gloss.

A high concentration master batch, in which the viscosity modifier for thermoplastic polyester resin (B) is mixed in a range of more than 50 parts by weight based on 100 parts by weight of the thermoplastic polyester resin (A), can be prepared in advance and then, in actual mold processing, the master batch can be used by mixing and diluting with thermoplastic polyester resin, so that the amount of the viscosity modifier becomes the desired amount within the range of 0.1 to 50 parts by weight.

The core-shell graft polymer (C) used in the present invention is composed of a polymer obtained by polymerizing a specific monomer mixture and by using together with the viscosity modifier for thermoplastic polyester resin (B), dispersibility of the core-shell graft polymer (C) in the composition of the present invention is improved significantly. As a result, the thermoplastic polyester resin composition of the present invention can improve impact strength, without losing physical and chemical properties of thermoplastic polyester resin. Also, the thermoplastic polyester resin composition of the present invention can improve melt viscosity in melt processing, such as extrusion molding, blow molding or calender molding, more than a composition containing only the thermoplastic polyester resin (A) and the viscosity modifier for thermoplastic polyester resin (B), and can suppress decrease of melt viscosity when molding in high temperatures. Consequently, processability can be stabilized.

The core-shell graft polymer (C) used in the present invention is a core-shell graft polymer containing a rubbery polymer (d') having glass transition temperature of at most 0°C as the core layer and a copolymer (e') as the shell layer. The rubbery polymer (d') which forms the core layer of the graft polymer can have a layer structure of only one layer or a multi-layer structure of two or more layers. In the same way, the polymer (e') which forms the shell layer can have a layer structure of only one layer or a multi-layer structure of two or more layers.

The rubbery polymer (d') which is the core layer is preferably a polymer obtained by polymerizing a monomer mixture (d) comprising (d-1) 35 to 100 % by weight of a butadiene and/or alkyl acrylate monomer, (d-2) 0 to 65 % by weight of an aromatic vinyl monomer, (d-3) 0 to 20 % by weight of a vinyl monomer copolymerizable therewith and (d-4) 0 to 5 % by weight of a multi-functional monomer. By emulsion polymerizing the monomer mixture (d), for example, a rubber latex (d'') containing the rubbery polymer (d') can be obtained.

An example of the butadiene in the butadiene and/or alkyl acrylate monomer (d-1) is 1,3-butadiene. Alkyl acrylate is a component for improving weatherability without losing the effect of improving impact strength of the molded article ultimately obtained from the thermoplastic polyester resin composition of the present invention. Specific examples of alkyl acrylate are alkyl acrylates containing an alkyl group having 1 to 8 carbon atoms such as methyl acrylate, ethyl acrylate, butyl acrylate and 2-ethylhexyl acrylate, but are not limited thereto. These can be used alone or two or more kinds can be used together.

The amount of the butadiene and/or alkyl acrylate monomer (d-1) is preferably 35 to 100 % by weight, more preferably 50 to 100 % by weight, further preferably 60 to 95 % by weight, particularly preferably 65 to 95 % by weight in the monomer mixture (d). When the amount is less than 35 % by weight, the impact strength of the ultimately obtained molded article may not sufficiently be improved.

The ratio of butadiene and alkyl acrylate in the butadiene and/or alkyl acrylate monomer (d-1) is not particularly limited. However, to impart high weatherability to the ultimately obtained molded article, the ratio is preferably 0 to 25 % by weight of butadiene and 75 to 100 % by weight of alkyl acrylate, more preferably 0 to 12 % by weight of butadiene and 88 to 100 % by weight of alkyl acrylate, further preferably 0 % by weight of butadiene and 100 % by weight of alkyl acrylate, when the total weight of butadiene and alkyl acrylate is 100 % by weight.

The aromatic vinyl monomer (d-2) has the function of improving transparency of the molded article ultimately obtained from the thermoplastic polyester resin composition of the present invention and is a component for adjusting the difference between the refraction of the core-shell graft polymer (C) and the refraction of the thermoplastic polyester resin (A) to as little as possible. Specific examples of the aromatic vinyl monomer (d-2) are styrene, α-methylstyrene, 1-vinylnaphthalene and 2-vinylnaphthalene, but are not limited thereto. These can be used alone or two or more kinds can be used together.

The amount of the aromatic vinyl monomer (d-2) is preferably 0 to 65 % by weight, more preferably 0 to 50 % by weight. When the amount is more than 65 % by weight, the amount of the butadiene and/or alkyl acrylate monomer (d-1) decreases in comparison and a rubbery polymer (d') having excellent impact strength may be difficult to obtain, thus being unfavorable. However, when transparency is unnecessary or impact strength is considered important, the amount is preferably 0 to 25 % by weight, more preferably 0 % by weight.

The vinyl monomer copolymerizable with the above monomers (d-3) is a component for finely adjusting compatibility of the core-shell graft polymer (C) and the thermoplastic polyester resin (A). Specific examples of the vinyl monomer copolymerizable therewith (d-3) are vinyl cyanide monomers such as acrylonitrile and methacrylonitrile and 4-hydroxybutyl acrylate, but not limited thereto. These can be used alone or two or more kinds can be used together.

The amount of the vinyl monomer copolymerizable with the above monomers (d-3) is preferably 0 to 20 % by weight, more preferably 0 to 10 % by weight, further preferably 0 % by weight. When the amount is more than 20 % by weight, the amount of the butadiene and/or alkyl acrylate monomer (d-1) decreases in comparison and a rubbery polymer (d') having excellent impact strength tends to be difficult to obtain.

The multi-functional monomer (d-4) is a component for forming a crosslinking structure in the obtained rubbery polymer (d'). Specific examples of the multi-functional monomer (d-4) are divinyl benzene, allyl acrylate and allyl methacrylate, but not limited thereto. Also, as the multi-functional monomer (d-4), molecules having radically polymerizable functional groups at both terminals, which are called macromers, such as α,ω-dimethacryloyloxy polyoxyethylene can be used. These can be used alone or two or more kinds can be used together.

The amount of the multi-functional monomer (d-4) is preferably 0 to 5 % by weight, more preferably 0.1 to 3 % by weight. When the amount is more than 5 % by weight, the amount of the butadiene and/or alkyl acrylate monomer (d-1) decreases in comparison and a rubbery polymer (d') having excellent impact strength tends to be difficult to obtain.

The method for obtaining the rubbery polymer (d') is riot particularly limited. The method of compounding an aqueous medium, a polymerization initiator and an emulsifier to the monomer mixture (d) containing each of the butadiene and/or alkyl acrylate monomer (d-1), the aromatic vinyl monomer (d-2), the vinyl monomer copolymerizable therewith (d-3) and the multi-functional monomer (d-4) in the specified amounts and polymerizing for example, by the usual emulsion polymerization method to obtain rubber latex (d") can be employed.

When obtaining the rubbery polymer (d'), addition and polymerization of the monomer mixture (d) can be conducted in one step or in several steps and is not particularly limited. Addition of the monomer mixture (d) can be added all at once, added continuously or in a combination of these in two or more steps and is not particularly limited.

The monomer mixture (d) can be obtained in the form of micells by introducing each of the butadiene and/or alkyl acrylate monomer (d-1), the aromatic vinyl monomer (d-2), the vinyl monomer copolymerizable therewith (d-3) and the multi-functional monomer (d-4) separately or in several combinations thereof in a reaction vessel charged with an aqueous medium, an initiator and an emulsifier in advance and then mixing by stirring in the reaction vessel. In such a case, by changing the inside of the reaction vessel to conditions in which polymerization can be initiated, the monomer mixture (d) can be polymerized, for example, by the usual emulsion polymerization method and the rubbery polymer (d') can be obtained in the state of a rubber latex (d").

The glass transition temperature of the rubbery polymer (d') obtained in this way is preferably at most 0°C, more preferably at most -30°C. When the glass transition temperature is higher then 0°C, the ultimately obtained molded article may not be able to absorb shock when large deformation speed is applied.

The monomer mixture (e) composing the shell layer comprises 10 to 100 % by weight of alkyl methacrylate (e-1), 0 to 60 % by weight of an alkyl acrylate monomer (e-2), 0 to 90 % by weight of an aromatic vinyl monomer (e-3), 0 to 25 % by weight of a cyanized vinyl monomer (e-4) and 0 to 20 % by weight of a vinyl monomer copolymerizable with the above monomers (e-5).

The alkyl methacrylate monomer (e-1) is a component for improving the adhesion properties between the core-shell graft polymer (C) and the thermoplastic polyester resin (A) and improving the impact strength of the molded article ultimately obtained from the thermoplastic resin composition of the present invention. Specific examples of the alkyl methacrylate monomer (e-1) are alkyl methacrylates containing an alkyl group having 1 to 5 carbon atoms such as methyl methacrylate, ethyl methacrylate and butyl methacrylate, but are not limited thereto. These can be used alone or two or more kinds can be used together.

The amount of the alkyl methacrylate monomer (e-1) is preferably 10 to 100 % by weight, more preferably 20 to 100 % by weight, further preferably 30 to 100 % by weight. When the amount is less than 10 % by weight, the impact strength of the ultimately obtained molded article cannot sufficiently be improved, thus being unfavorable. Furthermore, the impact strength of the ultimately obtained molded article can be improved significantly by containing preferably 60 to 100 % by weight, more preferably 80 to 100 % by weight of methyl methacrylate, when the total amount of the alkyl methacrylate monomer (e-1) is 100 % by weight.

The alkyl acrylate monomer (e-2) is a component for promoting favorable dispersion of the core-shell graft polymer (C) in the thermoplastic polyester resin (A) in the ultimately obtained molded article and improving impact strength of the molded article by adjusting the softening temperature of the shell layer of the core-shell graft polymer (C). Specific examples of the alkyl acrylate monomer (e-2) are alkyl acrylates containing an alkyl group having 2 to 12 carbon atoms such as ethyl acrylate, butyl acrylate and 2-ethylhexyl acrylate, but are not limited thereto. These can be used alone or two or more kinds can be used together.

The amount of the alkyl acrylate monomer (e-2) is preferably 0 to 60 % by weight, more preferably 0 to 50 % by weight, further preferably 0 to 40 % by weight. When the amount is more than 60 % by weight, the amount of the alkyl methacrylate monomer (e-1) decreases in comparison and the impact strength of the ultimately obtained molded article cannot sufficiently be improved.

In order to achieve favorable dispersion of the core-shell graft polymer (C) in the thermoplastic polyester resin (A) in the ultimately obtained molded article while maintaining sufficient adhesion properties between the core-shell graft polymer (C) and the thermoplastic polyester resin (A), preferably (e-1) is 60 to 100 % by weight and (e-2) is 0 to 40 % by weight, more preferably (e-1) is 70 to 100 % by weight and (e-2) is 0 to 30 % by weight, further preferably (e-1) is 80 to 100 % by weight and (e-2) is 0 to 20 % by weight, when the total amount of the alkyl methacrylate monomer (e-1) and the alkyl acrylate monomer (e-2) in the monomer mixture (e) is 100 % by weight. When (e-1) is less than 60 % by weight, the impact strength of the ultimately obtained molded article may not sufficiently be improved.

The aromatic vinyl monomer (e-3) has the function of improving transparency of the ultimately obtained molded article and is a component for adjusting the difference between the refraction of the core-shell graft polymer (C) and the refraction of the thermoplastic polyester resin (A) to as little as possible. Specific examples of the aromatic vinyl monomer (e-3) are monomers such as those given as examples of the aromatic vinyl monomer (d-2), but not limited thereto. These can be used alone or two or more kinds can be used together.

The amount of the aromatic vinyl monomer (e-3) is preferably 0 to 90 % by weight, more preferably 0 to 50 % by weight, further preferably 0 to 30 % by weight. When the amount is more than 90 % by weight, the amount of the alkyl methacrylate monomer (e-1) decreases in comparison and the impact strength of the ultimately obtained molded article cannot sufficiently be improved, thus being unfavorable.

The cyanized vinyl monomer (e-4) is a component for finely adjusting the compatibility of the core-shell graft polymer (C) and the thermoplastic polyester resin (A). Specific examples of the cyanized vinyl monomer (e-4) are acrylonitrile and methacrylonitrile, but are not limited thereto. These can be used alone or two or more kinds can be used together.

The amount of the cyanized vinyl monomer (e-4) is preferably 0 to 25 % by weight, more preferably 0 % by weight. When the amount is more than 25 % by weight, the amount of the alkyl methacrylate monomer (e-1) decreases in comparison and the impact strength of the ultimately obtained molded article may not sufficiently be improved.

The vinyl monomer copolymerizable with the above monomers (e-5) is a component for improving the processability when molding the thermoplastic polyester resin composition. Specific examples of the vinyl monomer (e-5) are methyl methacrylate, 4-hydroxybutyl acrylate and glycidyl methacrylate, but are not limited thereto. These can be used alone or two or more kinds can be used together.

The amount of the vinyl monomer copolymerizable with the above monomers (e-5) is preferably 0 to 20 % by weight, more preferably 0 to 10 % by weight, further preferably 0 % by weight. When the amount is more than 20 % by weight, the amount of alkyl methacrylate monomer decreases in comparison and the impact strength of the ultimately obtained molded article may not sufficiently be improved, thus being unfavorable.

The core-shell graft polymer (C) used in the present invention is obtained by graft copolymerizing the rubbery polymer (d') and the monomer mixture (e). The monomer mixture (e) gives a polymer (e') as a result of graft copolymerization. At this time, when the rubbery polymer (d') is obtained by emulsion polymerization, the rubbery polymer (d') can be used for graft copolymerization with the monomer mixture (e), dispersed in an aqueous medium as the rubber latex (d").

The ratio of the rubbery polymer (d') which is the core layer and the polymer (e') which is the shell layer of the core-shell graft polymer (C) used in the present invention is preferably 50 to 95 parts by weight of (d') and 50 to 5 parts by weight of (e'), more preferably 60 to 95 parts by weight of (d') and 40 to 5 parts by weight of (e'). When the amount of the rubbery polymer (d') is less than 50 parts by weight and the amount of the polymer (e') is more than 50 parts by weight, the coating state by the shell becomes poor and dispersibility of the core-shell graft polymer (C) in the thermoplastic polyester becomes poor. As a result, the impact strength of the molded article ultimately obtained from the thermoplastic polyester resin composition of the present invention may not sufficiently be improved. Also, when the amount of the rubbery polymer (d') is more than 95 parts by weight and the amount of the polymer (e') is less than 5 parts by weight, adhesion property between the graft polymer (C) and the thermoplastic polyester resin (A) is lost and the impact strength of the molded article ultimately obtained from the thermoplastic polyester resin composition of the present invention may not sufficiently be improved.

The method for obtaining the core-shell graft polymer (C) is not particularly limited. The method can be employed, wherein the monomer mixture (e) containing each of alkyl methacrylate (e-1), alkyl acrylate monomer (e-2), aromatic vinyl monomer (e-3), cyanized vinyl monomer (e-4) and vinyl monomer copolymerizable with the above monomers (e-5) in the desired amounts is added to a rubber latex (d") containing the rubbery polymer (d') having glass transition temperature of at most 0°C prepared in the above manner, a polymerization initiator is compounded to polymerize by the usual polymerization method and a powdery graft polymer is obtained from the graft polymer latex.

Addition and polymerization of the monomer mixture (e) can be conducted in one step or in several steps and is not particularly limited. The monomer mixture (e) can be added all at once, added continuously or in a combination of these in two or more steps and is not particularly limited.

The compounding ratio of the thermoplastic polyester resin (A) and the core-shell graft polymer (C) can be employed in a wide range and is 1 to 50 parts by weight, preferably 5 to 40 parts by weight, more preferably 8 to 30 parts by weight of the core-shell graft polymer (C) based on 100 parts by weight of the thermoplastic polyester resin. When the amount is less than 1 part by weight, the effect of improving impact strength may not sufficiently be exhibited and when the amount is more than 50 parts by weight, the melt viscosity becomes too high that the obtained molded article tends to shrink and lose its gloss.

The process for preparing the resin composition of the present invention is not particularly limited and known methods can be employed. For example, the method of obtaining the resin composition by mixing the thermoplastic polyester resin (A), the viscosity modifier for thermoplastic polyester resin (B) and the core-shell graft polymer (C) in advance using a Henschel mixer or a tumbler and thereafter, melt kneading using a single-screw extruder, twin-screw extruder, banbury mixer or heating roll can be employed.

Furthermore, when necessary, to the thermoplastic polyester resin composition of the present invention, other additives such as spreading agents, lubricants, impact modifiers, plasticizers, colorants and foaming agents can be added alone or two or more kinds can be added together.

The process for obtaining a molded article from the thermoplastic polyester resin composition of the present invention is not particularly limited and commonly used molding methods can be employed, such as extrusion molding, blow molding and calender molding. Even in extrusion molding which requires higher melt viscosity than in melt processing, stable processability is exhibited and a molded article having favorable surface properties is obtained.

Hereinafter, the present invention is explained in detail based on Examples and Comparative Examples, but not limited thereto. In the following descriptions, "part(s)" represents "parts by weight". Glycidyl methacrylate is abbreviated as GMA, glycidyl acrylate is abbreviated as GA, methyl methacrylate is abbreviated as MMA, butyl acrylate is abbreviated as BA, butyl methacrylate is abbreviated as BMA, ethyl acrylate is abbreviated as EA, styrene is abbreviated as ST, acrylonitrile is abbreviated as AN, ethylene is abbreviated as ET, vinyl acetate is abbreviated as VA, tertiary dodecylmercaptan is abbreviated as TDM and ethylenediamine tetraacetic acid is abbreviated as EDTA.

The evaluation methods used in the following Examples and Comparative Examples are described below.

(Measurement of polymerization conversion)

The polymerization conversion is calculated from the following formula.

$$\text{Polymerization conversion (\%) =}$$

$$\text{amount of produced polymers/amount of charged monomers} \times 100$$

(Measurement of weight average molecular weight)

The weight average molecular weight is found by gel permeation chromatography based on polymethyl methacrylate.

(Pellet preparation conditions)

A mixture of 100 parts of polyethylene terephthalate (available from Mitsubishi Chemical Corporation, NOVAPEX GM-330, intrinsic viscosity: 0.65) dried for 5 hours at 140°C and 5 parts of the polymer sample is melt kneaded using a 44 mm twin-screw extruder (TEX 44) available from Japan Steel Works, Ltd. under the following conditions (molding temperature, screw rotation speed, discharge amount, die diameter) to prepare pellets.

Cylinder temperature: C 1 = 230°C, C2 = 240°C, C3 = 240°C, C4 = 250°C, C5 = 260°C, C6 = 260°C, die = 270°C
Screw rotation speed: 100 rpm

Discharge amount: 20 kg/hr
Die diameter: 3 mm$\phi$

(Evaluation method of crystallinity)

A flat board die of 50 mm width $\times$ 3 mm thickness for extrusion molding, a die for cool forming and a drawing machine are attached to a 20 mm single-screw extruder available from made by Toyo Seiki Co., Ltd. and the above pellets are extrusion molded under the following conditions (cylinder temperature, screw rotation speed, discharge amount) to prepare a molded article for measuring crystallinity. At this time, the temperature of the die for cool forming is set to 0, 20 and 50°C.

Extrusion molding conditions

Cylinder temperature: C 1 = 250°C, C2 = 270°C, C3 = 270°C; die = 250°C
Screw rotation speed: 50 rpm
Discharge amount: 3 kg/ hr

The cold crystallizing energy $\Delta H_{ch}$ (J/g) and the crystal fusion energy $\Delta H_m$ (J/g) are measured using a differential scanning calorimeter (DSC) and the crystallinity is calculated from the following formula.

$$\text{Crystallinity (\%)} = (\Delta H_m/\Delta H_{ch})/\Delta H_f \times 100$$

$\Delta H_f$: equilibrium heat of fusion of PET = 135 (J/g)
Measurement conditions of DSC
Measurement temperature range: 40 to 300°C
Temperature increase rate: 10°C/min.

(Evaluation of gloss of molded article surface)

The gloss of the molded article surface is measured with respect to the surface of a flat board molded article obtained by extrusion molding using a glossmeter (made by BYK-Gardner, Microgloss 60°) at an incident angle and light receiving angle of 60°. The gloss value is an index of the surface properties of the molded article.

(Evaluation of anti-draw down effect)

The above pellets are extrusion molded under the following conditions (cylinder temperature, screw rotation speed, discharge amount) using a 20 mm single-screw extruder made by Toyo Seiki Co., Ltd. The melted resin discharged from the die outlet is drawn and the length of the resin at which it can no longer endure its own weight and begins to draw down is measured. The anti-draw down effect is evaluated based on the drawing distance as an index of drawing ease in extrusion molding.

Extrusion molding conditions

Cylinder temperature: C1 = 250°C, C2 = 270°C, C3 = 270°C, die = 250°C
Screw rotation speed: 50 rpm
Discharge amount: 3 kg/hr
Die diameter: 5 mm$\phi$

(Izod impact strength)

The Izod impact strength is measured according to ATM D-256 using a flat board molded article obtained by extrusion molding (sample form: 1/4" notched, measurement temperature: 23°C, average value of 5 samples, unit: kg·cm/cm).

Synthesis Examples 1 and 2 of polymer samples of the viscosity modifier for thermoplastic polyester resin and Synthesis Examples 3 and 4 of samples of the core-shell graft polymer are described below.

SYNTHESIS EXAMPLE 1

An 8 liter reaction vessel equipped with a stirrer and a cooler was charged with 200 parts of distilled water and 0.5 part of sodium dioctylsulfosuccinate. Subsequently, after the inside of the vessel was replaced with nitrogen, the temperature of the reaction vessel was increased to 70°C while stirring. Thereafter, 0.2 part of potassium persulfate was added and after stirring for 15 minutes, a mixture containing 5 parts of GMA, 68 parts of MMA, 17 parts of BA and 1.0 part of TDM was added continuously over 4 hours. One hour after adding, 3 parts of MMA and 7 parts of BA were added continuously over 1 hour. After adding, the mixture was stirred for 1 more hour and then cooled to obtain a latex.
The polymerization conversion was 99.8 %. The obtained latex was salted out with an aqueous solution of calcium chloride and after the temperature was increased to 90°C and thermal treatment was conducted, the latex was filtered using a centrifugal dehydrator. A dehydrated cake of the obtained copolymer was washed with water and dried for 15 hours at 50°C by a parallel flow dryer to obtain a white powdery sample of the two-step polymer (1).

SYNTHESIS EXAMPLE 2

An 8 liter reaction vessel equipped with a stirrer and a cooler was charged with 200 parts of distilled water and 0.5 part of sodium dioctylsulfosuccinate. Subsequently, after the inside of the vessel was replaced with nitrogen, the temperature of the reaction vessel was increased to 70°C while stirring. Thereafter, 0.2 part of potassium persulfate was added and after stirring for 15 minutes, a mixture containing 90 parts of GMA, 3 parts of MMA, 7 parts of BA and 1.0 part of TDM was added continuously over 4.5 hours. After adding, the mixture was stirred for 1 more hour and then cooled to obtain a latex.
The polymerization conversion was 99.4 %. The obtained latex was salted out with an aqueous solution of calcium chloride and after the temperature was increased to 90°C and thermal treatment was conducted, the latex was filtered using a centrifugal dehydrator. A dehydrated cake of the obtained copolymer was washed with water and dried for 15 hours at 50°C by a parallel flow dryer to obtain a white powdery sample of the one-step polymer (7).

SYNTHESIS EXAMPLE 3

A pressure-resistant polymerization vessel equipped with a stirrer was charged with 200 parts (parts by weight, hereinafter the same) of water, 1.5 parts of sodium oleate, 0.002 part of ferrous sulfate ($FeSO_4·7H_2O$), 0.005 part of EDTA·2Na salt, 0.2 part of sodium formaldehyde sulfoxylate, 0.2 part of tripotassium phosphate, 100 parts of butadiene, 0.5 part of divinyl benzene and 0.1 part of diisopropylbenzene hydroperoxide. Polymerization was conducted for 15 hours at 50°C and a rubber latex (R1-1) having polymerization conversion of 99 %, average particle size of 0.08 μm and glass transition temperature of -90°C was obtained.
Subsequently, a polymerization vessel equipped with a stirrer was charged with 7 parts (solid content) of rubber latex (R1-1), 200 parts of water, 0.0017 part of ferrous sulfate ($FeSO_4·7H_2O$); 0.004 part of EDTA·2Na salt, 0.17 part of sodium formaldehyde sulfoxylate, 0.17 part of tripotassium phosphate, 93 parts of butadiene, 0.45 part of divinyl benzene and 0.085 part of diisopropylbenzene hydroperoxide. Polymerization was conducted at 50°C and at 6 hours, 12 hours, 18 hours and 24 hours after starting polymerization, 0.3 part of sodium oleate was added respectively. After 30 hours, a rubber latex (R1-2) having polymerization conversion of 99 %, average particle size of 0.21 μm and glass transition temperature of -90°C was obtained.
Furthermore, 150 parts (solid content) of rubber latex (R1-2), 200 parts of water, 0.002 part of ferrous sulfate ($FeSO_4·7H_2O$), 0.004 part of EDTA·2Na salt and 0.1 part of sodium formaldehyde sulfoxylate were mixed and the temperature of the mixture was increased to 70°C. Thereafter, a mixture of 45 parts of MMA, 5 parts of ST and 0.1 part of cumene hydroperoxide was added continuously over 4 hours and post-polymerization was conducted for 1 hour to obtain a graft polymer latex (G1-1) having average particle size of 0.23 μm.
The graft polymer latex (G1-1) was salted out with sulfuric acid and subjected to thermal treatment, dehydrating treatment and drying treatment to obtain a powdery graft polymer (I).

SYNTHESIS EXAMPLE 4

A pressure-resistant polymerization vessel equipped with a stirrer was charged with 200 parts of water, 0.5 part of sodium oleate, 0.002 part of ferrous sulfate ($FeSO_4·7H_2O$), 0.005 part of EDTA·2Na salt, 0.2 part of sodium formaldehyde sulfoxylate and 0.2 part of tripotassium phosphate. A mixture of 99 parts of BA, 1 part of divinyl benzene and 0.1 part of diisopropylbenzene hydroperoxide was added continuously over 10 hours at 50°C and at 2.5 hours, 5 hours and 7.5 hours after starting polymerization, 0.5 part of sodium oleate was added respectively. After 1 hour of post-polymerization, a rubber latex (R7-1) containing a rubbery polymer having polymerization conversion of 99 %, average particle size of 0.08 μm and glass transition temperature of - 43°C was obtained.

Subsequently, a pressure-resistant polymerization vessel equipped with a stirrer was charged with 5 parts (solid content) of rubber latex (R7-1), 190 parts of water, 0.0019 part of ferrous sulfate ($FeSO_4 \cdot 7H_2O$), 0.0048 part of EDTA·2Na salt, 0.19 part of sodium formaldehyde sulfoxylate and 0.19 part of tripotassium phosphate. A mixture of 94.05 parts of BA, 0.95 part of divinyl benzene and 0.095 part of diisopropylbenzene hydroperoxide was added continuously over 9.5 hours at 50°C and at 2.5 hours, 5 hours and 7.5 hours after starting polymerization, 0.2 part of sodium oleate was added respectively. After 1 hour of post-polymerization, a rubber latex (R7-2) having polymerization conversion of 99 %, average particle size of 0.22 μm and glass transition temperature of -43°C was obtained.

Furthermore, a polymerization vessel equipped with a stirrer was charged with 180 parts (60 parts of solid content) of rubber latex (R7-2), 200 parts of water, 0.002 part of ferrous sulfate ($FeSO_4 \cdot 7H_2O$), 0.004 part of EDTA·2Na salt and 0.1 part of sodium formaldehyde sulfoxylate and after mixing, the temperature of the mixture was increased to 70°C. Thereafter, a mixture of 36 parts of MMA, 4 parts of EA and 0.1 part of cumene hydroperoxide was added continuously over 2 hours and 30 minutes and post-polymerization was conducted for 1 hour to obtain a graft polymer latex (G7-1) having average particle size of 0.24 μm.

The obtained graft polymer latex (G7-1) was salted out with sulfuric acid and subjected to thermal treatment, dehydrating treatment and drying treatment to obtain powdery graft polymer (VII).

EXAMPLES 1 to 7 and COMPARATIVE EXAMPLES 1 to 5

As the viscosity modifier for thermoplastic polyester resin, the two-step polymer samples (2) to (6) and (8) were obtained in the same manner as in Synthesis Example 1 and the one-step polymer sample (9) was obtained in the same manner as in Synthesis Example 2, except that the weight average molecular weight was adjusted to about 50,000 by adding 1.0 part of the chain transfer agent TDM and the composition ratio of GMA was as shown in Table 1. As the core-shell graft polymer, a sample (IX) was obtained in the same manner as in Synthesis Example 4 except that the core layer/shell layer ratio was 80/20. Using 3 parts of the obtained viscosity modifier for thermoplastic polyester resin and 10 parts of the core-shell graft polymer sample (IX), evaluation of the anti-drawn down effect, surface gloss of the molded article and Izod impact strength was conducted. The results are shown in Table 1.

The results of a system in which only 3 parts of sample (4) of the viscosity modifier for thermoplastic polyester was used and a system in which only 10 or 20 parts of sample (IX) of the core-shell graft polymer was used are also shown in Table 1.

TABLE 1

| Ex. No. | 1 | 2 | 3 | 4 | 5 | 6 | 7 | Com. Ex. 1 | Com. Ex. 2 | Com. Ex. 3 | Com. Ex. 4 | Com. Ex. 5 |
|---|---|---|---|---|---|---|---|---|---|---|---|---|
| **Viscosity modifier for polyester** | | | | | | | | | | | | |
| Polymer sample No. | (1) | (2) | (3) | (4) | (5) | (6) | (7) | (8) | (9) | (4) | – | – |
| Polymer composition (part(s)) | | | | | | | | | | | | |
| Monomer mixture of first step | | | | | | | | | | | | |
| GMA | 5 | 15 | 20 | 40 | 65 | 90 | 90 | 1.5 | 100 | 40 | – | – |
| MMA | 68 | 60 | 56 | 40 | 20 | – | 3 | 70.8 | – | 40 | – | – |
| BA | 17 | 15 | 14 | 10 | 5 | – | 7 | 17.7 | – | 10 | – | – |
| Monomer mixture of second step | | | | | | | | | | | | |
| MMA | 3 | 3 | 3 | 3 | 3 | 3 | – | 3 | – | 3 | – | – |
| BA | 7 | 7 | 7 | 7 | 7 | 7 | – | 7 | – | 7 | – | – |
| Chain transfer agent | | | | | | | | | | | | |
| TDM | 1.0 | 1.0 | 1.0 | 1.0 | 1.0 | 1.0 | 1.0 | 1.0 | 1.0 | 1.0 | – | – |
| Polymerization conversion (%) | 99.8 | 99.8 | 99.2 | 99.4 | 99.3 | 99.3 | 99.4 | 99.3 | 99.1 | 99.4 | – | – |
| Weight average molecular weight | 50000 | 50000 | 51000 | 52000 | 49000 | 51000 | 51000 | 53000 | 50000 | 52000 | – | – |
| Amount (part(s)) | 3 | 3 | 3 | 3 | 3 | 3 | 3 | 3 | 3 | 3 | – | – |
| **Core-shell graft polymer** | | | | | | | | | | | | |
| Sample No. | (IX) | (IX) | (IX) | (IX) | (IX) | (IX) | (IX) | (IX) | (IX) | – | (IX) | (IX) |
| Amount (part(s)) | 10 | 10 | 10 | 10 | 10 | 10 | 10 | 10 | 10 | – | 10 | 20 |
| **Evaluation results** | | | | | | | | | | | | |
| Anti-draw down effect (cm) | 38 | 55 | 74 | 85 | 85 | 76 | 75 | 9 | 28 | 23 | 10 | 23 |
| Surface gloss of molded article (%) | 89.0 | 84.1 | 82.4 | 81.1 | 80.2 | 82.0 | 82.1 | – | 37.6 | 84.5 | – | 81.2 |
| Izod impact strength (kg·cm/cm) | 70 | 75 | 80 | 120 | 125 | 100 | 95 | – | – | 2.9 | – | 5.1 |

As indicated by the results of Table 1, a composition having favorable anti-draw down effect, surface gloss of the molded article and Izod impact strength is obtained in Examples 1 to 7 wherein the composition ratio of GMA in the monomer mixture is within the range of the present invention, as in samples (1) to (7). In contrast, in Comparative Example 1 using sample (8) wherein the GMA composition ratio is smaller than the range of the present invention, the anti-draw down effect was found to decrease. Also, in Comparative Example 2 using sample (9) wherein the GMA composition ratio is larger than the range of the present invention, the anti-draw down effect and surface gloss of the molded article were found to become poor. In Comparative Examples 1 and 2 using samples (8) and (9), a sample for measuring Izod impact strength could not be prepared.

EXAMPLES 8 to 13 and COMPARATIVE EXAMPLES 6 and 7

As the viscosity modifier for thermoplastic polyester resin, the two-step polymer samples (10) to (16) were obtained in the same manner as in Synthesis Example 1 and the one-step polymer sample (17) was obtained in the same manner as in Synthesis Example 2, except that the weight average molecular weight was adjusted to about 150,000 by adding 0.5 part of the chain transfer agent TDM and the composition ratio of GMA was as shown in Table 2. Using 3 parts of the obtained sample of the viscosity modifier for thermoplastic polyester resin and 10 parts of the core-shell graft polymer sample (IX), evaluation of the anti-drawn down effect, surface gloss of the molded article and Izod impact strength was conducted. The results are shown in Table 2.

TABLE 2

| Ex. No. | 8 | 9 | 10 | 11 | 12 | 13 | Com. Ex. 6 | Com. Ex. 7 |
|---|---|---|---|---|---|---|---|---|
| Viscosity modifier for polyester | | | | | | | | |
| Polymer sample No. | (10) | (11) | (12) | (13) | (14) | (15) | (16) | (17) |
| Polymer composition (part(s)) | | | | | | | | |
| Monomer mixture of first step | | | | | | | | |
| GMA | 5 | 15 | 20 | 40 | 65 | 90 | 1.5 | 100 |
| MMA | 68 | 60 | 56 | 40 | 20 | – | 70.8 | – |
| BA | 17 | 15 | 14 | 10 | 5 | – | 17.7 | – |
| Monomer mixture of second step | | | | | | | | |
| MMA | 3 | 3 | 3 | 3 | 3 | 3 | 3 | – |
| BA | 7 | 7 | 7 | 7 | 7 | 7 | 7 | – |
| Chain transfer agent | | | | | | | | |
| TDM | 0.5 | 0.5 | 0.5 | 0.5 | 0.5 | 0.5 | 0.5 | 0.5 |
| Polymerization conversion (%) | 99.6 | 99.7 | 99.8 | 99.7 | 99.6 | 99.7 | 99.7 | 99.7 |
| Weight average molecular weight | 149000 | 149000 | 150000 | 151000 | 151000 | 150000 | 150000 | 150000 |
| Evaluation results | | | | | | | | |
| Anti-draw down effect (cm) | 35 | 42 | 60 | 75 | 74 | 60 | 9 | 30 |
| Surface gloss of molded article (%) | 91.2 | 85.5 | 83.0 | 82.3 | 82.4 | 83.1 | – | 38.4 |
| Izod impact strength (kg·cm/cm) | 65 | 70 | 75 | 110 | 115 | 90 | – | 25 |

EP 1 559 748 A1

As indicated by the results of Table 2, a composition having favorable anti-draw down effect, surface gloss of the molded article and Izod impact strength is obtained in Examples 8 to 13 wherein the composition ratio of GMA in the monomer mixture is within the range of the present invention, as in samples (10) to (15). In contrast, in Comparative Example 6 using sample (16) wherein the GMA composition ratio is smaller than the range of the present invention, the anti-draw down effect was found to decrease. Also, in Comparative Example 7 using sample (17) wherein the GMA composition ratio is larger than the range of the present invention, the anti-draw down effect, surface gloss of the molded article and Izod impact strength were found to become poor.

EXAMPLES 14 to 19 and COMPARATIVE EXAMPLES 8 and 9

As the viscosity modifier for thermoplastic polyester resin, the two-step polymer samples (18) to (24) were obtained in the same manner as in Synthesis Example 1 and the one-step polymer sample (25) was obtained in the same manner as in Synthesis Example 2, except that the weight average molecular weight was adjusted to about 5,000 to 6,000 by adding 20 parts of the chain transfer agent TDM and the composition ratio of GMA was as shown in Table 3. Using 3 parts of the obtained sample of the viscosity modifier for thermoplastic polyester resin and 10 parts of the core-shell graft polymer sample (IX), evaluation of the anti-drawn down effect, surface gloss of the molded article and Izod impact strength was conducted. The results are shown in Table 3.

TABLE 3

| Ex. No. | 14 | 15 | 16 | 17 | 18 | 19 | Com. Ex. 8 | Com. Ex. 9 |
|---|---|---|---|---|---|---|---|---|
| Viscosity modifier for polyester | | | | | | | | |
|   Polymer sample No. | (18) | (19) | (20) | (21) | (22) | (23) | (24) | (25) |
|   Polymer composition (part(s)) | | | | | | | | |
|     Monomer mixture of first step | | | | | | | | |
|       GMA | 5 | 15 | 20 | 40 | 65 | 90 | 1.5 | 100 |
|       MMA | 68 | 60 | 56 | 40 | 20 | – | 70.8 | – |
|       BA | 17 | 15 | 14 | 10 | 5 | – | 17.7 | – |
|     Monomer mixture of second step | | | | | | | | |
|       MMA | 3 | 3 | 3 | 3 | 3 | 3 | 3 | – |
|       BA | 7 | 7 | 7 | 7 | 7 | 7 | 7 | – |
|     Chain transfer agent | | | | | | | | |
|       TDM | 20 | 20 | 20 | 20 | 20 | 20 | 20 | 20 |
|   Polymerization conversion (%) | 99.3 | 99.1 | 99.2 | 99.3 | 99.4 | 99.3 | 99.4 | 99.6 |
|   Weight average molecular weight | 5000 | 5000 | 5000 | 6000 | 5000 | 5000 | 6000 | 5000 |
| Evaluation results | | | | | | | | |
|   Anti-draw down effect (cm) | 47 | 73 | 79 | 120 | 120 | 105 | 9 | 50 |
|   Surface gloss of molded article (%) | 88.2 | 83.3 | 82.7 | 66.8 | 65.9 | 71.4 | – | 37.8 |
|   Izod impact strength (kg·cm/cm) | 75 | 85 | 90 | 115 | 120 | 90 | – | 25 |

EP 1 559 748 A1

As indicated by the results of Table 3, a composition having favorable anti-draw down effect, surface gloss of the molded article and Izod impact strength is obtained in Examples 14 to 19 wherein the composition ratio of GMA in the monomer mixture is within the range of the present invention, as in samples (18) to (23). In contrast, in Comparative Example 8 using sample (24) wherein the GMA composition ratio is smaller than the range of the present invention, the anti-draw down effect was found to decrease. Also, in Comparative Example 9 using sample (25) wherein the GMA composition ratio is larger than the range of the present invention, the anti-draw down effect, surface gloss of the molded article and Izod impact strength were found to become poor.

EXAMPLES 20 to 23 and COMPARATIVE EXAMPLES 10 to 12

As the viscosity modifier for thermoplastic polyester resin, the samples (26) to (32) having different weight average molecular weight were obtained in the same manner as in Synthesis Example 1, except that the amount of GMA was fixed to 20 parts and 90 parts and the amount of the chain transfer agent TDM was as shown in Table 4. Using 3 parts of the obtained sample of the viscosity modifier for thermoplastic polyester resin and 10 parts of the core-shell graft polymer sample (IX), evaluation of the anti-drawn down effect, surface gloss of the molded article and Izod impact strength was conducted. The results are shown in Table 4.

TABLE 4

| Ex. No. | 20 | 21 | 22 | 23 | Com. Ex. 10 | Com. Ex. 11 | Com. Ex. 12 |
|---|---|---|---|---|---|---|---|
| Viscosity modifier for polyester | | | | | | | |
| Polymer sample No. | (26) | (27) | (28) | (29) | (30) | (31) | (32) |
| Polymer composition (part(s)) | | | | | | | |
| Monomer mixture of first step | | | | | | | |
| GMA | 20 | 20 | 90 | 90 | 20 | 90 | 20 |
| MMA | 56 | 56 | – | – | 56 | – | 56 |
| BA | 14 | 14 | – | – | 14 | – | 14 |
| Monomer mixture of second step | | | | | | | |
| MMA | 3 | 3 | 3 | 3 | 3 | 3 | 3 |
| BA | 7 | 7 | 7 | 7 | 7 | 7 | 7 |
| Chain transfer agent | | | | | | | |
| TDM | 10 | 0.05 | 20 | 0.05 | 30 | 0.02 | 0 |
| Polymerization conversion (%) | 99.4 | 99.7 | 99.6 | 99.7 | 99.3 | 99.7 | 99.6 |
| Weight average molecular weight | 23000 | 380000 | 22000 | 380000 | 900 | 495000 | 2130000 |
| Evaluation results | | | | | | | |
| Anti-draw down effect (cm) | 78 | 32 | 100 | 40 | – | 22 | 14 |
| Surface gloss of molded article (%) | 81.4 | 91.8 | 80.1 | 88.5 | – | – | – |
| Izod impact strength (kg·cm/cm) | 75 | 70 | 95 | 75 | – | – | – |

EP 1 559 748 A1

As indicated by the results of Table 4, a composition having favorable anti-draw down effect, surface gloss of the molded article and Izod impact strength is obtained in Examples 20 to 23 wherein the weight average molecular weight of the monomer mixture is within the range of the present invention, as in samples (26) to (29). In contrast, in Comparative Examples 11 and 12 using samples (31) and (32) wherein the weight average molecular weight is larger than the range of the present invention, the anti-draw down effect was found to decrease. Also, in Comparative Example 10 using sample (30) wherein the weight average molecular weight is smaller than the range of the present invention, the anti-draw down effect, evaluation could not be conducted as the sample could not be separated from water, which is the polymerization medium, when salting out the latex after polymerization.

EXAMPLES 24 to 29

As the viscosity modifier for thermoplastic polyester resin, the samples (33) to (38) were obtained in the same manner as in Synthesis Example 1, except that the amount of alkyl (meth)acrylate containing an epoxy group was fixed to 40 parts and the monomers were replaced with the types and amounts shown in Table 5. Using 3 parts of the obtained sample of the viscosity modifier for thermoplastic polyester resin and 10 parts of the core-shell graft polymer sample (IX), evaluation of the anti-drawn down effect, surface gloss of the molded article and Izod impact strength was conducted. The results are shown in Table 5.

TABLE 5

| Ex. No. | 24 | 25 | 26 | 27 | 28 | 29 |
|---|---|---|---|---|---|---|
| Viscosity modifier for polyester | | | | | | |
| Polymer sample No. | (33) | (34) | (35) | (36) | (37) | (38) |
| Polymer composition (part(s)) | | | | | | |
| Monomer mixture of first step | | | | | | |
| GMA | – | 40 | 40 | 40 | 40 | 40 |
| GA | 40 | – | – | – | – | – |
| MMA | 40 | 40 | 45 | 40 | – | 50 |
| BA | 10 | – | 5 | – | – | – |
| BMA | – | 10 | – | – | – | – |
| ST | – | – | – | 10 | 25 | – |
| AN | – | – | – | – | 25 | – |
| Monomer mixture of second step | | | | | | |
| MMA | 3 | 3 | 3 | 3 | 3 | 3 |
| BA | 7 | 7 | 7 | 7 | 7 | 7 |
| Chain transfer agent | | | | | | |
| TDM | 1.0 | 1.0 | 1.0 | 1.0 | 1.0 | 1.0 |
| Polymerization conversion (%) | 99.8 | 99.7 | 99.7 | 99.8 | 99.4 | 99.7 |
| Weight average molecular weight | 53000 | 55000 | 52000 | 50000 | 50000 | 49000 |
| Evaluation results | | | | | | |
| Anti-draw down effect (cm) | 77 | 75 | 73 | 75 | 72 | 73 |
| Surface gloss of molded article (%) | 82.1 | 82.6 | 83.2 | 82.4 | 83.7 | 83.0 |
| Izod impact strength (kg·cm/cm) | 120 | 100 | 120 | 120 | 120 | 120 |

As indicated by the results of Table 5, a composition having favorable anti-draw down effect, surface gloss of the molded article and Izod impact strength is obtained in Examples 24 to 29 wherein the types and amounts of the monomers are within the range of the present invention, as in samples (33) to (38).

EXAMPLES 30 to 33 and COMPARATIVE EXAMPLES 13 to 17

As the viscosity modifier for thermoplastic polyester resin, the one-step polymer samples (39) to (47) were obtained in the same manner as in Synthesis Example 2, except that the weight average molecular weight was adjusted to about 50,000 by adding 1.0 part of the chain transfer agent TDM and the monomers were replaced with the types and amounts shown in Table 6. Using 3 parts of the obtained sample of the viscosity modifier for thermoplastic polyester resin and 10 parts of the core-shell graft polymer sample (IX), evaluation of the anti-drawn down effect, surface gloss of the molded article and Izod impact strength was conducted. The results are shown in Table 6.

TABLE 6

| Ex. No. | 30 | 31 | 32 | 33 | Com. Ex. 13 | Com. Ex. 14 | Com. Ex. 15 | Com. Ex. 16 | Com. Ex. 17 |
|---|---|---|---|---|---|---|---|---|---|
| Viscosity modifier for polyester | | | | | | | | | |
| Polymer sample No. | (39) | (40) | (41) | (42) | (43) | (44) | (45) | (46) | (47) |
| Polymer composition (part(s)) | | | | | | | | | |
| Monomer mixture of first step | | | | | | | | | |
| GMA | 18 | 18 | 18 | 18 | 18 | 18 | 18 | 40 | 90 |
| MMA | 3 | 3 | 45 | 75 | – | – | – | – | – |
| BA | 7 | 7 | 7 | 7 | – | – | – | – | – |
| ST | 72 | – | 30 | – | – | – | 41 | 50 | 10 |
| AN | – | 72 | – | – | – | – | 41 | – | – |
| ET | – | – | – | – | 82 | 72 | – | – | – |
| VA | – | – | – | – | – | 10 | – | – | – |
| Monomer mixture of second step | | | | | | | | | |
| MMA | 3 | 3 | 3 | 3 | 3 | 3 | – | 3 | – |
| BA | 7 | 7 | 7 | 7 | 7 | 7 | – | 7 | – |
| Chain transfer agent | | | | | | | | | |
| TDM | 1.0 | 1.0 | 1.0 | 1.0 | 1.0 | 1.0 | 1.0 | 1.0 | 1.0 |
| Polymerization conversion (%) | 99.2 | 99.4 | 99.7 | 99.7 | 99.3 | 99.2 | 99.6 | 99.2 | 99.1 |
| Weight average molecular weight | 52000 | 53000 | 53000 | 51000 | 49000 | 49000 | 49000 | 49000 | 48000 |
| Evaluation results | | | | | | | | | |
| Anti-draw down effect (cm) | 68 | 66 | 70 | 68 | 18 | 16 | 21 | 23 | 23 |
| Surface gloss of molded article (%) | 84.1 | 84.5 | 83.7 | 84.0 | – | – | – | – | – |
| Izod impact strength (kg·cm/cm) | 75 | 75 | 80 | 75 | – | – | – | – | – |

EP 1 559 748 A1

As indicated by the results of Table 6, a composition having favorable anti-draw down effect, surface gloss of the molded article and Izod impact strength is obtained in Examples 30 to 33 using samples (39) to (42) wherein the type and amount of the alkyl (meth)acrylate other than the alkyl (meth)acrylate containing an epoxy group is within the range of the present invention. In contrast, in Comparative Examples 13 to 17 using samples (43) and (47) wherein the type and amount of the alkyl (meth)acrylate other than the alkyl (meth)acrylate containing an epoxy group is less than the present invention, the anti-draw down effect was found to decrease.

EXAMPLES 34 to 37

As the core-shell graft polymer, samples (I) to (IV) were obtained in the same manner as in Synthesis Example 3, except that the core layer / shell layer ratio was as shown in Table 7. Using 10 parts of the obtained core-shell graft polymer sample and 3 parts of sample (4) of the viscosity modifier for thermoplastic polyester resin, evaluation of the anti-drawn down effect, surface gloss of the molded article and Izod impact strength was conducted. The results are shown in Table 7.

TABLE 7

| Ex. No. | 34 | 35 | 36 | 37 |
|---|---|---|---|---|
| Core-shell graft polymer | | | | |
| Polymer sample No. | I | II | III | IV |
| Content of core layer (part(s)) | 50 | 60 | 70 | 80 |
| Content of shell layer (part(s)) | 50 | 40 | 30 | 20 |
| Evaluation results | | | | |
| Anti-draw down effect (cm) | 85 | 85 | 85 | 85 |
| Surface gloss of molded article (%) | 84.0 | 84.2 | 84.0 | 84.1 |
| Izod impact strength (kg·cm/cm) | 105 | 125 | 120 | 115 |

As indicated by the results of Table 7, a composition having favorable anti-drawn down effect, surface gloss of the molded article and Izod impact strength is obtained in Examples 34 to 37 wherein the core layer / shell layer ratio of the core-shell graft polymer is within the range of the present invention as in samples (I) to (IV).

EXAMPLES 38 to 41

As the core-shell graft polymer, samples (V) to (VIII) were obtained in the same manner as in Synthesis Example 4, except that the core layer/shell layer ratio was as shown in Table 8. Using 10 parts of the obtained core-shell graft polymer sample and 3 parts of sample (4) of the viscosity modifier for thermoplastic polyester resin, evaluation of the anti-drawn down effect, surface gloss of the molded article and Izod impact strength was conducted. The results are shown in Table 8.

TABLE 8

| Ex. No. | 38 | 39 | 40 | 41 |
|---|---|---|---|---|
| Core-shell graft polymer | | | | |
| Polymer sample No. | V | VI | VII | VIII |
| Content of core layer (part(s)) | 60 | 70 | 80 | 90 |
| Content of shell layer (part(s)) | 40 | 30 | 20 | 10 |
| Evaluation results | | | | |
| Anti-draw down effect (cm) | 85 | 85 | 85 | 85 |
| Surface gloss of molded article (%) | 85.0 | 84.4 | 84.6 | 85.1 |
| Izod impact strength (kg·cm/cm) | 120 | 135 | 130 | 130 |

As indicated by the results of Table 8, a composition having favorable anti-drawn down effect, surface gloss of the molded article and Izod impact strength is obtained in Examples 38 to 41 wherein the core layer/ shell layer ratio of the core-shell graft polymer is within the range of the present invention as in samples (V) to (VIII).

EXAMPLES 42 to 46 and COMPARATIVE EXAMPLES 18 and 19

Using 10 parts of the core-shell graft polymer sample (IX) and sample (4) as the viscosity modifier for thermoplastic polyester resin in the amount shown in Table 9, evaluation of the anti-drawn down effect, surface gloss of the molded article and Izod impact strength was conducted. The results are shown in Table 9.

TABLE 9

| Ex. No. | 42 | 43 | 44 | 45 | 46 | Com. Ex. 18 | Com. Ex. 19 |
|---|---|---|---|---|---|---|---|
| Viscosity modifier for polyester | | | | | | | |
| Polymer sample No. | (4) | (4) | (4) | (4) | (4) | (4) | (4) |
| Amount (part(s)) | 0.3 | 8 | 15 | 20 | 45 | 0.05 | 60 |
| Evaluation results | | | | | | | |
| Anti-draw down effect (cm) | 80 | 90 | 110 | 125 | 150 | 9 | 170 |
| Surface gloss of molded article (%) | 85.8 | 84.3 | 81.1 | 78.8 | 72.5 | – | 29.6 |
| Izod impact strength (kg·cm/cm) | 120 | 135 | 130 | 130 | 15 | – | 10 |

As indicated by the results of Table 9, a composition having favorable anti-drawn down effect, surface gloss of the molded article and Izod impact strength is obtained in Examples 42 to 46 wherein the amount of the viscosity modifier for thermoplastic polyester resin is within the range of the present invention. In contrast, in Comparative Example 18 wherein the amount of the viscosity modifier for thermoplastic polyester resin is less than the range of the present invention, the anti-draw down effect was found to be insufficient. Also, in Comparative Example 19 wherein the amount of the viscosity modifier for thermoplastic polyester resin is more than the range of the present invention, surface gloss of the molded article and Izod impact strength were found to become poor.

EXAMPLES 47 to 52 and COMPARATIVE EXAMPLES 20 and 21

Using 3 parts of sample (4) of the viscosity modifier for thermoplastic polyester resin and sample (III) as the core-shell graft polymer in the amount shown in Table 10, evaluation of the anti-drawn down effect, surface gloss of the molded article and Izod impact strength was conducted. The results are shown in Table 10.

TABLE 10

| Ex. No. | 47 | 48 | 49 | 50 | 51 | 52 | Com. Ex. 20 | Com. Ex. 21 |
|---|---|---|---|---|---|---|---|---|
| Core-shell graft polymer | | | | | | | | |
| Polymer sample No. | (III) | (III) | (III) | (III) | (III) | (III) | (III) | (III) |
| Amount (part(s)) | 3 | 8 | 13 | 20 | 35 | 45 | 0.5 | 60 |
| Evaluation results | | | | | | | | |
| Anti-draw down effect (cm) | 71 | 80 | 95 | 110 | 125 | 140 | 40 | 150 |
| Surface gloss of molded article (%) | 88.2 | 85.3 | 83.1 | 81.6 | 78.6 | 75.9 | 88.9 | 31.4 |
| Izod impact strength (kg·cm/cm) | 55 | 80 | 115 | 125 | 145 | 135 | 5 | 10 |

EP 1 559 748 A1

As indicated by the results of Table 10, a composition having favorable anti-drawn down effect, surface gloss of the molded article and Izod impact strength is obtained in Examples 47 to 52 wherein the amount of the core-shell graft polymer is within the range of the present invention. In contrast, in Comparative Example 20 wherein the amount of the core-shell graft polymer is less than the range of the present invention, the anti-draw down effect was found to be insufficient. Also, in Comparative Example 21 wherein the amount of the core-shell graft polymer is more than the range of the present invention, surface gloss of the molded article and Izod impact strength were found to become poor.

EXAMPLES 53 to 58 and COMPARATIVE EXAMPLES 22 and 23

Using 3 parts of sample (4) of the viscosity modifier for thermoplastic polyester resin and sample (VII) as the core-shell graft polymer in the amount shown in Table 11, evaluation of the anti-drawn down effect, surface gloss of the molded article and Izod impact strength was conducted. The results are shown in Table 11.

TABLE 11

| Ex. No. | 53 | 54 | 55 | 56 | 57 | 58 | Com. Ex. 22 | Com. Ex. 23 |
|---|---|---|---|---|---|---|---|---|
| Core-shell graft polymer sample No. | (VII) | (VII) | (VII) | (VII) | (VII) | (VII) | (VII) | (VII) |
| Amount of polymer sample (part(s)) | 3 | 8 | 13 | 20 | 35 | 45 | 0.5 | 60 |
| Evaluation results | | | | | | | | |
| Anti-draw down effect (cm) | 72 | 80 | 95 | 110 | 125 | 140 | 40 | 150 |
| Surface gloss of molded article (%) | 88.6 | 85.3 | 83.3 | 81.7 | 78.1 | 75.0 | 88.7 | 31.4 |
| Izod impact strength (kg·cm/cm) | 60 | 90 | 110 | 130 | 160 | 145 | 10 | 20 |

EP 1 559 748 A1

As indicated by the results of Table 11, a composition having favorable anti-drawn down effect, surface gloss of the molded article and Izod impact strength is obtained in Examples 53 to 58 wherein the amount of the core-shell graft polymer is within the range of the present invention. In contrast, in Comparative Example 22 wherein the amount of the core-shell graft polymer is less than the range of the present invention, the anti-draw down effect was found to be insufficient. Also, in Comparative Example 23 wherein the amount of the core-shell graft polymer is more than the range of the present invention, surface gloss of the molded article and Izod impact strength were found to become poor.

EXAMPLES 59 to 64

Using 3 parts of sample (4) of the viscosity modifier for thermoplastic polyester resin and 10 parts of sample (III) shown in Table 10 as the core-shell graft polymer, evaluation of the anti-drawn down effect, surface gloss of the molded article, Izod impact strength and crystallinity was conducted in a system in which the temperature of the die for cool forming was adjusted to 0°C, 20°C and 50°C. The results are shown in Table 12.

TABLE 12

| Ex. No. | 59 | 60 | 61 | 62 | 63 | 64 |
|---|---|---|---|---|---|---|
| Matrix resin | | | | | | |
| PET | 100 | 95 | 90 | 50 | 90 | 90 |
| PETG | – | 10 | 20 | 50 | – | – |
| PC | – | – | – | | 10 | 20 |
| Temperature of die for cool forming (°C) | | | 0 | | | |
| Evaluation results | | | | | | |
| Anti-draw down effect (cm) | 85 | 95 | 95 | 100 | 90 | 95 |
| Surface gloss of molded article (%) | 81.1 | 82.2 | 81.3 | 80.5 | 77.4 | 73.1 |
| Crystallinity (%) | 7.3 | 8.3 | 7.8 | 3.6 | 7.4 | 7.2 |
| Izod impact strength (kg·cm/cm) | 120 | 120 | 120 | 120 | 120 | 120 |
| Temperature of die for cool forming (°C) | | | 20 | | | |
| Evaluation results | | | | | | |
| Anti-draw down effect (cm) | 95 | 95 | 95 | 100 | 90 | 95 |
| Surface gloss of molded article (%) | 82.5 | 83.7 | 83.0 | 81.8 | 77.4 | 74.8 |
| Crystallinity (%) | 25.0 | 13.5 | 13.1 | 6.8 | 16.7 | 16.2 |
| Izod impact strength (kg·cm/cm) | 120 | 115 | 120 | 120 | 120 | 120 |
| Temperature of die for cool forming (°C) | | | 50 | | | |
| Evaluation results | | | | | | |
| Anti-draw down effect (cm) | 95 | 95 | 95 | 100 | 90 | 95 |
| Surface gloss of molded article (%) | 84.3 | 85.1 | 84.3 | 82.7 | 78.1 | 75.0 |
| Crystallinity (%) | 24.5 | 18.1 | 12.1 | 9.4 | 19.8 | 19.2 |
| Izod impact strength (kg·cm/cm) | 35 | 105 | 120 | 120 | 115 | 115 |

As indicated by the results of Table 12, when only PET is used as the matrix resin, crystallinity is high and Izod impact strength is low when the temperature of the die for cool forming is high. In contrast, in Examples 60 to 64 wherein PET and an amorphous resin are mixed, cystallinity is low and high Izod impact strength is maintained even when the temperature of the die for cool forming is high. Also, the resin tends to not be affected by the cooling speed. As PETG in the Table, 6763 available from Eastman Chemical Corporation was used and as PC (polycarbonate), Lexan 141R available from GE Plastics was used.

INDUSTRIAL APPLICABILITY

The thermoplastic polyester resin composition of the present invention has significantly increased melt viscosity and therefore, enables stable processing in extrusion molding, blow molding and calender molding, particularly profile extrusion and extrusion molding of boards and pipes which are difficult. Furthermore, the surface properties of the molded article obtained therefrom are improved and also, impact strength is improved.

**Claims**

1.  A thermoplastic polyester resin composition comprising (B) 0.1 to 50 parts by weight of a viscosity modifier for a thermoplastic polyester resin comprising

    (a) 3 to 95 % by weight of alkyl (meth)acrylate containing an epoxy group,
    (b) 5 to 97 % by weight of another alkyl (meth)acrylate and
    (c) 0 to 92 % by weight of another vinyl monomer copolymerizable therewith, and

    having weight average molecular weight of 1,000 to 400,000; and (C) 1 to 50 parts by weight of a core-shell graft polymer,
    based on (A) 100 parts by weight of thermoplastic polyester resin.

2.  The thermoplastic polyester resin composition of Claim 1, wherein said viscosity modifier for thermoplastic polyester resin (B) is a viscosity modifier for thermoplastic polyester resin comprising

    (a) 15 to 95 % by weight of alkyl (meth)acrylate containing an epoxy group,
    (b) 5 to 85 % by weight of another alkyl (meth)acrylate and
    (c) 0 to 80 % by weight of another vinyl monomer copolymerizable therewith, and

    having weight average molecular weight of 1,000 to 400,000.

3.  The thermoplastic polyester resin composition of Claim 1 or 2, wherein said core-shell graft polymer (C) is a core-shell graft polymer having
    as the core layer, 50 to 95 parts by weight of a rubbery polymer (d') which comprises a monomer mixture (d) containing

    (d-1) 35 to 100 % by weight of a butadiene and/or alkyl acrylate monomer,
    (d-2) 0 to 65 % by weight of an aromatic vinyl monomer,
    (d-3) 0 to 20 % by weight of a vinyl monomer copolymerizable therewith; and
    (d-4) 0 to 5 % by weight of a multi-functional monomer, and

    has glass transition temperature of at most 0°C;
    and as the shell layer, 5 to 50 parts by weight of a polymer (e') which comprises a monomer mixture (e) containing

    (e-1) 10 to 100 % by weight of an alkyl methacrylate monomer,
    (e-2) 0 to 60 % by weight of an alkyl acrylate monomer,
    (e-3) 0 to 90 % by weight of an aromatic vinyl monomer,
    (e-4) 0 to 25 % by weight of a cyanized vinyl monomer, and
    (e-5) 0 to 20 % by weight of a vinyl monomer copolymerizable therewith.

4.  A molded article comprising the thermoplastic polyester resin composition of Claim 1, 2 or 3.

**5.** A molded article obtained by extrusion molding the thermoplastic polyester resin composition of Claim 1, 2 or 3.

# INTERNATIONAL SEARCH REPORT

| | International application No. |
|---|---|
| | PCT/JP03/14129 |

**A. CLASSIFICATION OF SUBJECT MATTER**
Int.Cl$^7$ C08L67/02

According to International Patent Classification (IPC) or to both national classification and IPC

**B. FIELDS SEARCHED**

Minimum documentation searched (classification system followed by classification symbols)
Int.Cl$^7$ C08L67/00-67/04

Documentation searched other than minimum documentation to the extent that such documents are included in the fields searched

| | | | |
|---|---|---|---|
| Jitsuyo Shinan Koho | 1926–2003 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-139780 A (Mitsubishi Rayon Co., Ltd.), 22 May, 2001 (22.05.01), Column 1, lines 2 to 15 (Family: none) | 1-5 |
| A | JP 11-236492 A (Teijin Ltd.), 31 August, 1999 (31.08.99), Column 1, lines 2 to 7 (Family: none) | 1-5 |

☐ Further documents are listed in the continuation of Box C.    ☐ See patent family annex.

| | |
|---|---|
| *  Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 28 November, 2003 (28.11.03) | 24 December, 2003 (24.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)